# EUROPÄISCHE PATENTSCHRIFT

(11) **EP 4 005 834 B1**
(45) Veröffentlichungstag und Bekanntmachung des Hinweises auf die Patenterteilung: **11.10.2023**
(21) Anmeldenummer: 21210653.8
(22) Anmeldetag: 26.11.2021
(51) Int. Cl.: B60G 7/02, B60G 11/12, B60G 9/00

(54) **FAHRWERKSAUFHÄNGUNG MIT EXZENTRISCHEM JUSTIERELEMENT**
CHASSIS SUSPENSION WITH ECCENTRIC ADJUSTING ELEMENT
SUSPENSION DE CHÂSSIS POURVU D'ÉLÉMENT D'AJUSTEMENT EXCENTRIQUE

(30) Priorität: 26.11.2020 DE 102020131375
(43) Veröffentlichungstag der Anmeldung: 01.06.2022
(73) Patentinhaber: GIGANT GmbH, 49413 Dinklage (DE)
(72) Erfinder: Melnikow, Witali, 49393 Lohne (DE)
(74) Vertreter: Weeg, Thomas

(56) Entgegenhaltungen:
- EP-A1- 0 943 529
- DE-U1- 8 716 234
- US-A- 3 960 388
- US-A1- 2006 181 044

## Beschreibung

Die vorliegende Erfindung bezieht sich auf eine Fahrwerksaufhängung eines Nutzfahrzeugs nach dem Oberbegriff des Anspruchs 1.

Eine gattungsgemäße Fahrwerksaufhängung ist aus der Schrift EP 0 943 529 A1 bekannt. Die dort offenbarte Verstellvorrichtung ist nur grob mit einem Hammer einstellbar.

Eine Haltevorrichtung für einen Lagerbolzen ist aus der Schrift US 2006/0181044 A1 bekannt. Das dort offenbarte Exzenterelement ist in einem Langloch gehalten. Es dient dem Zweck, den Lagerbolzen in einer eingestellten Stellung zu halten, nachdem die Spannschraube am Lagerbolzen angezogen worden ist.

Eine weitere Haltevorrichtung ist aus der Schrift US 3,960,388 bekannt. Das dort offenbarte Exzenterelement weist auf seiner dem Lagerbock abgewandten Oberseite eine Anzahl von Nasen auf, die über die Oberfläche des Exzenterelements überstehen und so angeordnet und ausgebildet sind, dass sie als formschlüssige Mitnehmer für eine separate Schraube dienen, die auf den Lagerbolzen aufgeschraubt wird. Über die Nasen wird auch das Exzenterelement in eine Rotationsbewegung versetzt, wenn eine Schraube auf den Lagerbolzen aufgeschraubt wird und die Schraube im Eingriff ist mit den hervorstehenden Nasen. Wenn im Verlauf des Aufschraubens der Schraube auf den Lagerbolzen der auf der dem Lagerbock zugewandten Seite des Exzenterelements ausgebildete Drehpin in ein dafür vorgesehenes Loch in dem benachbarten Schenkel des Lagerbocks einrastet, kann sich das Exzenterelement nicht mehr um den Lagerbolzen drehen, sondern nur noch um den Drehpin. Wird die Drehbewegung der Schraube nun fortgesetzt, wird das auf die Schraube wirkende Antriebsmoment über die Nasen in eine Drehbewegung des Exzenterelements um den Drehpin herum übertragen. Dabei verschiebt das Exzenterelement den Lagerbolzen, der zwar der Rotationsbewegung des Exzenterelements in Rotationsrichtung nicht folgen kann, weil er in seinem Langloch gehalten ist, allerdings entlang der Erstreckungsrichtung des Langlochs so weit, bis das Ende des Langlochs als Anschlag erreicht ist. Auf diese Weise kann der Lagerbolzen durch eine Drehbewegung der auf den Lagerbolzen aufgeschraubten Schraube je nach Drehrichtung der Schraube stufenlos entlang der Erstreckungsrichtung des Langlochs in eine gewünschte Stellung im Lagerbock bewegt werden. Durch die Bewegung des Lagerbolzens entlang der Längserstreckung des zugehörigen Langlochs kann der Lagerbolzen in eine Lage im Lagerbock gebracht werden, in der das auf dem Lagerbolzen gelagerte Fahrwerksteil eine für eine perfekte Fahrwerkeinstellung winkelgenau passende Ausrichtung einnimmt. Um die einmal eingestellte räumliche Lage des Lagerbolzens dauerhaft beizubehalten, wird das Exzenterelement mit dem Rahmen verschweißt, so dass es nicht mehr beweglich ist.

Bei dieser Ausgestaltung hat es sich der aufwendige Herstellungsprozess als nachteilig erwiesen, weil zunächst die Nasen in das Exzenterelement eingebracht werden müssen, was eine zusätzliche Bearbeitung des Exzenterelements darstellt, und die Fixierung des Exzenterelements am Rahmen einen Schweißvorgang erforderlich macht, bei dem die Lackierung oder ein Korrosionsschutz des Rahmens im Schweißbereich zerstört werden. Eine einmal fixierte Winkellage kann nachträglich nur noch mit einem hohen Montageaufwand korrigiert werden. Es ist auch nachteilig, dass die Schraube, mit der das Exzenterelement auf den Lagerbolzen aufgeschraubt wird, nicht mehr freigängig ist, wenn die Schraube an den Nasen der Exzenterplatte anliegt. Von der Montageseite des Exzenterelements kann die Schraube dann nicht mehr festgezogen werden. Die nach dem Einrasten des Drehpins noch mögliche Schraubbewegung wird vollständig benötigt, um die Lage des Lagerbolzens im Langloch festzulegen. Ein Anziehen der Schrauben zur Verspannung des Lagerbolzens in seiner Einbaulage ist nur noch vom gegenüberliegenden Ende des Lagerbolzens möglich. Wenn das auf dem Lagerbolzen gelagerte Fahrwerksteil ausgebaut werden soll, muss auch zuerst die Verschraubung des Lagerbolzens an dessen gegenüberliegendem Ende gelöst werden, das aber in der Einbausituation in einem Fahrzeug nicht immer gut zugänglich ist.

Aus der Schrift US 2011/0068524 A1 ist es bekannt, auf den Kopf eines Lagerbolzens drehfest und exzentrisch zur Längsachse des Lagerbolzens eine sechseckige Kopfplatte aufzusetzen. In jeder der drei möglichen Einbaulagen schlägt die Kopfplatte gegen seitliche Anschläge an, die dadurch eine Drehbewegung des Lagerbolzens blockieren. Da die Kopfplatte exzentrisch zur Längsachse auf den Lagerbolzen aufgesetzt ist, ergeben sich je nach Drehstellung der Kopfplatte drei unterschiedliche Positionen in Längserstreckungsrichtung des Langlochs, in denen der Lagerbolzen von der Kopfplatte gehalten ist. In der Schrift ist auch noch offenbart, dass eine weitere sechseckige Platte auf der entgegengesetzten Seite exzentrisch auf den Lagerbolzen aufgesteckt werden kann, deren Drehbeweglichkeit ebenfalls durch seitliche Anschläge blockiert ist. Durch die Kombination von zwei sechseckigen Platten mit jeweils drei möglichen Einbaustellungen ergeben sich insgesamt neun Kombinationen möglicher Einbaustellungen, durch die der Lagerbolzen in einer entsprechenden Winkellage im Lagerbock gehalten ist. Auf dem Lagerbock müssen vier Anschläge montiert werden. Die Positionierung des Lagerbolzens ist hier demnach auf diese neun Stellungen beschränkt, so dass eine stufenlose Feineinstellung nicht möglich ist. Der Lagerbolzen wird bei der Montage durch eine einseitige Verschraubung mit einer Kontermutter, die von der gegenüberliegenden Seite des Lagerbocks her gegen die Kopfplatte angezogen wird, im Lagerbock verspannt. Die Verschraubung ist hier also auch nur von einer Seite her möglich.

Es ist die Aufgabe der vorliegenden Erfindung, eine stufenlose Feinjustierung eines Lagerbolzens in einem Lagerbock zu ermöglichen, die mit kostengünstigen Komponenten mit einem möglichst geringen Montageaufwand ausgeführt werden kann und die eine nachträgliche Demontage ohne einen erhöhten Arbeitsaufwand durch eine schlechte Zugänglichkeit der Verschraubung erlaubt.

Die Aufgabe wird für eine gattungsgemäße Fahrwerksaufhängung mit den kennzeichnenden Merkmalen des Anspruchs 1 gelöst.

Die Montage des Exzenterelements und die stufenlose Einstellung des Lagerbolzens sind schnell und einfach möglich, weil das Exzenterelement einfach auf den Lagerbolzen aufgesteckt wird. Indem dabei der Drehpin in das zugehörige Drehlager eingesteckt wird, ist gleichzeitig die Drehverbindung zwischen dem Exzenterelement und dem Schenkel des Lagerbocks hergestellt. Die Drehverbindung zwischen dem Exzenterelement und dem Schenkel des Lagerbocks kann dabei so geschaffen werden, dass das Exzenterelement auf der dem Lagerbock zugewandten Seite einen Drehpin aufweist, der in ein geeignet positioniertes Loch in dem benachbarten Schenkel des Lagerbocks als Drehlager eingesteckt wird, oder der Drehpin ist an dem Schenkel des Achsbocks angebracht, und das Exzenterelement wird mit einem darin ausgebildeten Loch auf den Drehpin aufgesteckt. Der Drehpin kann einteilig mit dem Exzenterelement verbunden sein, beispielsweise, indem das Exzenterelement als ein Gussteil hergestellt wird, in dessen Form der Drehpin enthalten ist, oder der Drehpin ist ein gesondertes Bauteil, das mit einer geeigneten Verbindungstechnik mit dem Exzenterelement oder dem Schenkel des Lagerbocks verbunden wird.

Sodann wird der Lagerbolzen auf einfache Weise ausgerichtet. Durch die mehreckig ausgeführte Umfangskontur der das Exzenterelement bildenden Platte bietet diese an den Ecken Ansatzpunkte, an denen ein angesetztes Werkzeug wie beispielweise ein Gabelschlüssel einen guten Halt findet. Die Ecken können dazu scharfkantig ausgebildet sein. Die Ecken können aber auch gerundet gestaltet sein, solange es noch möglich ist, dass ein entsprechend gestaltetes Werkzeug eine entsprechende Ecke noch formschlüssig umgreift. Über die Ecken können einfach und sicher hohe Stellkräfte vom Werkzeug direkt auf das Exzenterelement übertragen werden. Die Verstellung erfolgt somit über das Exzenterelement selbst und nicht mehr über ein gesondertes Element, das gesondert montiert werden muss und erst mittelbar auf das Exzenterelement einwirkt, wie beispielsweise eine gesonderte Schraube oder ein gesondertes Werkzeug. Wird das an das Exzenterelement angelegte Werkzeug um den Drehpunkt des Drehpins herum in eine entsprechende Richtung bewegt, bewegt sich auch der Lagerbolzen stufenlos und auf einfache Weise in die entsprechende Richtung entlang der Erstreckungsrichtung des Langlochs. Er kann so in seiner räumlichen Lage im Lagerbock genau ausgerichtet werden.

Die Präzision und Leichtigkeit, mit der der Lagerbolzen im Lagerbock ausgerichtet werden kann, ist auch davon abhängig, welche Form und welches Maß die Durchführungsöffnung im Exzenterelement aufweist, durch die ein Ende des Lagerbolzens hindurchgeführt ist. Die Verstellung der räumlichen Lage des Lagerbolzens ist natürlich umso schwergängiger, je enger die Durchführungsöffnung im Verhältnis zum entsprechenden Maß des Lagerbolzens ist. Ein Spiel zwischen diesen Bauteilen würde aber auch einen Leerweg bei der Verstellung der räumlichen Lage des Lagerbolzens bedeuten. Vorteilhaft ist deshalb ein möglichst spielfreier, aber drehbeweglicher Sitz des Lagerbolzens im Exzenterelement. Das Exzenterelement soll nicht auf dem Lagerbolzen festklemmen, es soll aber auch nicht allzu lose schlackern können. Ein freies Spiel zwischen den Bauteilen von beispielsweise 1 mm ist dabei noch tolerabel.

Die Lagefixierung des Lagerbolzens im Lagerbock erfolgt dann mittels der Spannelemente über die Verspannung im Lagerbock. Bei den Spannelementen kann es sich beispielsweise um Schraubmuttern handeln, die auf die Enden des Lagerbolzens aufgeschraubt werden, oder es handelt sich um einen Schraubbolzen, der an seinem dem Schraubkopf abgewandten Ende mit einem Gewinde versehen ist, auf das eine Schraubmutter aufgeschraubt wird. Beim Festziehen der Schraubmuttern pressen diese auch das oder die Exzenterelemente auf die Außenflächen der Schenkel des Lagerbocks. Nach dem Anziehen der Spannelemente bleibt der Lagerbolzen auch vom Exzenterelement in seiner Ausrichtung im Lagerbock gehalten. Ein Verschweißen des Exzenterelements ist nicht erforderlich. Das Korrosionsrisiko im Verbindungsbereich ist dadurch erheblich reduziert. Eine Nachbearbeitung der Verbindungszone mit einem Korrosionsschutz ist nicht erforderlich. Da die Spannelemente mit einem einfachen Werkzeug leicht gelöst werden können, ist es auch möglich, die gesamte Fahrwerksaufhängung mit einem nur geringem Montageaufwand auszubauen, Verschleißteile zu ersetzen und/oder Spurkorrekturen auch nach der erstmaligen Montage und Ausrichtung des Lagerbolzens vorzunehmen.

Das Langloch, das sich im Schenkel des Achsbocks befindet, ist in seiner Höhe an den Durchmesser des einzusteckenden Lagerbolzens angepasst und in seiner Länge so dimensioniert, dass es ausreicht, die Einstellungserfordernisse an den Lagerbolzen abzudecken. So können über eine Langlochlänge von beispielsweise 12, 15 oder 20 mm bereits übliche mögliche Winkelfehlstellungen eines Lagerbolzens ausgeglichen werden.

Bei dem Fahrwerksteil, das auf dem Lagerbolzen gelagert ist, kann es sich insbesondere um einen gefederten Längslenker einer Achsaufhängung einer Starrachse eines Anhängers handeln. Der Längslenker kann bei Federbewegungen um den Lagerbolzen herum auf- und abschwingen. Durch die genaue Einstellung der räumlichen Lage des Lagerbolzens im Lagerbock befinden sich die Räder der an dem Längslenker befestigen Fahrzeugachse in einer in Fahrtrichtung weisenden Spur, in der die Reifen nicht wegen einer eventuellen leichten Spurabweichung über die Fahrbahn radieren, vorzeitig verschleißen und einen erhöhten Zugkraftbedarf verursachen.

Die Platte als Exzenterelement ist kostengünstig herstellbar. Das Exzenterelement kann kompakter ausfallen, was eine Materialeinsparung bedeutet. Da auf die Einbringung von ausgeformten Nasen verzichtet werden kann, ist die Herstellung einer solchen Platte günstig. Die Platte kann mit dem mehreckigen Umfang als einfaches Stanz- oder Gussteil hergestellt werden.

Nach einer Ausgestaltung der Erfindung weist das Exzenterelement auf seiner dem benachbarten Schenkel des Lagerbocks zugewandten Seite keine Vorsprünge auf, die in das in diesem Schenkel ausgebildete Langloch hineinragen. Da außer dem Material des Lagerbolzens kein Material des Exzenterelements oder ein sonstiges Bauteil in ein Langloch mehr hineinragt, kann die volle Länge des Langloch für die Verstellung der räumlichen Lage des Lagerbolzen genutzt werden, oder das Langloch ist entsprechend kürzer ausgebildet, was die Bearbeitung des betreffenden Schenkels des Lagerbocks vereinfacht und kostengünstiger macht. Das Exzenterelement kann dadurch auf der dem Schenkel zugewandten Seite plan und damit kostengünstiger ausgestaltet werden. Auch die Montage ist vereinfacht, weil es nicht erforderlich ist, einen Vorsprung in das Langloch einzufädeln. Auch das Risiko von eventuellen Montagefehlern ist dadurch verringert. Zwar fehlt nun Stützmaterial im Bereich des Langlochs, um die Stirnfläche der Distanzhülse, die im Bereich zwischen den Schenkeln des Achsbocks auf den Lagerbolzen aufgesetzt ist, bei einem Anziehen der Spannelemente abzustützen, eine ausreichend feste und sichere Verspannung der Exzenterelemente und der Spannhülse mit den Schenkeln des Achsbocks ist jedoch gleichwohl möglich.

Nach einer Ausgestaltung der Erfindung ist das Exzenterelement als vier- oder sechseckige Platte ausgestaltet. Ein vier- oder sechseckig ausgestaltetes Exzenterelement kann mit einem üblichen Schraubenschlüssel verstellt werden. Ein sechseckiges Exzenterelement kann beispielsweise auf eine Schlüsselweite von 60 mm ausgelegt sein.

Nach einer Ausgestaltung der Erfindung ist an beiden Schenkeln des Lagerbocks ein Exzenterelement verwendet. Durch die Verwendung von zwei Exzenterelementen auf gegenüberliegenden Seiten des Lagerbolzens kann dieser von beiden Seiten her gezielt in seiner räumlichen Lage im Lagerbock ausgerichtet und gehalten werden.

Nach einer Ausgestaltung der Erfindung weisen das oder die Langlöcher in den Schenkeln des Lagerbocks entlang ihrer Längserstreckungsrichtung einen gebogenen Verlauf auf. Da sich ein Exzenterelement und damit auch die in dem Exzenterelement ausgebildete Durchführungsöffnung bei einer Verstellung der räumlichen Lage des Lagerbolzens um den Drehpin dreht, kann auf entsprechende Toleranzen in der Größe des Langlochs und/oder in der Durchführungsöffnung verzichtet werden, wenn der Verlauf des zugehörigen Langlochs durch eine entsprechend gebogenen Verlauf an den Schwenkweg der Durchführungsöffnung angepasst ist.

Nach einer Ausgestaltung der Erfindung weist das Exzenterelement auf seiner dem Lagerbock abgewandten Seite eine Positionsmarkierung auf. Über die Positionsmarkierung ist erkennbar, mit welcher Drehstellung des Exzenterelements der Lagerbolzen im Lagerbock ausgerichtet ist. Bei der Demontage des Lagerbolzens und einem anschließenden Wiedereinbau reicht es dann zur erneuten Ausrichtung des Lagerbolzens aus, das Exzenterelement so auszurichten, dass sich die Positionsmarkierung wieder in derselben Position befindet wie vor der Demontage des Lagerbolzens. Der Aus- und Einbau des Lagerbolzens wird dadurch erheblich vereinfacht.

Nach einer Ausgestaltung der Erfindung weist das Drehlager zur Lagerung des Drehpins eine unrunde Innenform auf. Durch die unrunde Innenform des Drehlagers ist es möglich, das Exzenterelement in bestimmten Schwenklagen festzulegen und darin zu halten, so dass der Lagerbolzen in einer solchen Schwenklage im Langloch ebenfalls eine bestimmte Position einnimmt und darin festgelegt ist.

Weitere Merkmale der Erfindung ergeben sich aus den Ansprüchen, den Figuren und der gegenständlichen Beschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Seitenansicht auf eine Fahrwerksaufhängung an einem Nutzfahrzeug,
- Fig. 2:: eine Schnittansicht durch einen Lagerbock im Bereich des Lagerbolzens entlang der Schnittlinie D-D in Fig. 1, und
- Fig. 3:: eine dreidimensionale Ansicht auf eine Vorrichtung zur Justierung der räumlichen Lage eines Lagerbolzens vor ihrem Zusammenbau.

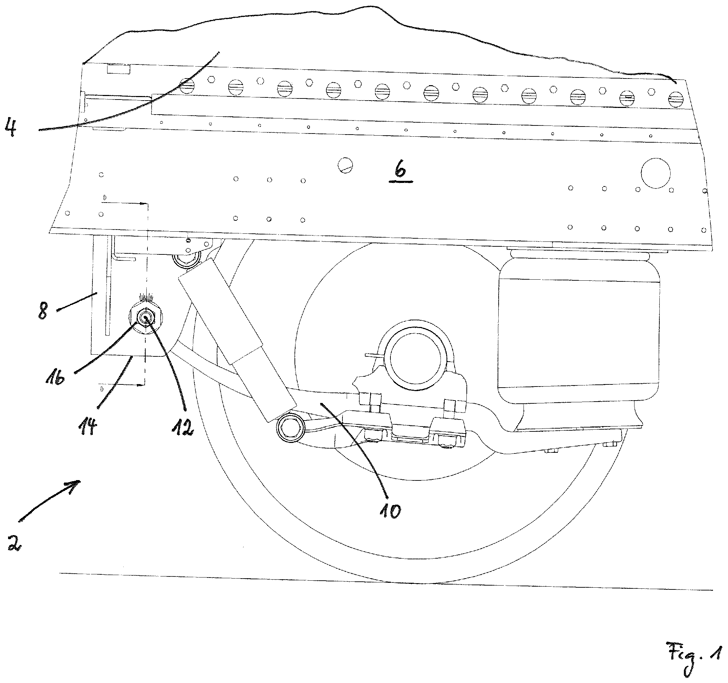

In Fig. 1 ist eine Seitenansicht auf eine Fahrwerksaufhängung 2 eines Nutzfahrzeugs 4 gezeigt. An einem Rahmen 6 ist ein Lagerbock 8 befestigt, der beispielsweise aus einem U-förmig gekanteten Blechkörper bestehen kann, der zwei zueinander beabstandete Schenkel 14 aufweist. In dem Lagerbock 8 ist ein Fahrwerksteil 10 gehalten, bei dem es sich beispielsweise um einen Längslenker einer Achsaufhängung handeln kann, an dem eine Starrachse mit daran angebauten Rädern gehalten ist. Der Längslenker kann sich an seinem freien Ende um den Lagerbolzen 12 als Drehlager auf- und abwärtsbewegen, wie es durch den Doppelpfeil angezeigt ist, um während der Fahrt Fahrbahnunebenheiten auszuweichen.

Der Lagerbolzen 12 wird in den Schenkeln 14 und den darin ausgebildeten Langlöchern 22 über zumindest ein Exzenterelement 16 in einer gewünschten räumlichen Ausrichtung gehalten. Der Aufbau und die Funktionsweise des Exzenterelements 16 ist in den nachfolgenden Figuren näher beschrieben.

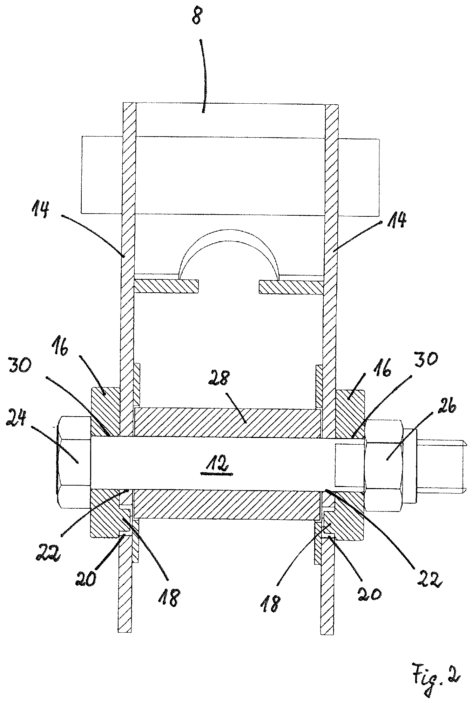

In Fig. 2 ist eine Schnittansicht durch einen Lagerbock 8 entlang der Schnittlinie II-II in Fig. 1 im Bereich des Lagerbolzens 12 gezeigt. In der Schnittansicht sind die beiden Schenkel 14 des Lagerbocks 8 gut erkennbar. Auf die Außenflächen der Schenkel 14 ist jeweils ein Exzenterelement 16 von außen aufgesetzt. Im Ausführungsbeispiel verfügen die Exzenterelemente 16 auf ihrer den Schenkeln 14 zugewandten Seite jeweils über einen Drehpin 18, der über die plane Auflagefläche des Exzenterelements 16 hervorsteht und jeweils in einem Drehlager 20 gelagert ist. Das Drehlager 20 besteht im Ausführungsbeispiel aus einer kreisrunden Öffnung, die in das Material der jeweiligen Schenkel 14 eingebracht ist. Die Form eines Drehlagers 20 kann aber auch von der kreisrunden Form abweichen und eine beliebige sonstige geeignete Form einnehmen. Der Drehpin 18 und das Drehlager 20 bilden zusammen eine Drehverbindung zwischen den Schenkeln 14 des Lagerbocks 8 sowie den Exzenterelementen 16.

Der Lagerbolzen 12 ist in der in Fig. 2 gezeigten Schnittansicht durch zwei Langlöcher 22 hindurchgesteckt, die sich jeweils in den Schenkeln 14 des Lagerbocks 8 befinden. Der Lagerbolzen 12 verfügt im gezeigten Ausführungsbeispiel an seinem ersten Ende über einen Schraubkopf 24, der auf der dem Lagerbock 8 abgewandten Seite A des Exzenterelements 16 aufliegt und diesen in der in Fig. 2 gezeigten verschraubten Stellung auf die nach außen weisende Oberfläche des zugehörigen Schenkels 14 aufpresst. Auf der gegenüberliegenden Seite ist der Lagerbolzen 12 mit einer Schraubmutter 26 versehen, die ebenfalls auf der dem Lagerbock 8 abgewandten Seite A des Exzenterelements 16 aufliegt und das Exzenterelement 16 gegen die nach außen weisende Seite des dort zugehörigen Schenkels 14 presst. Der Schraubkopf 24 und die Schraubmutter 26 als Spannelemente pressen die Exzenterelemente 16 so stark gegen die nach außen weisenden Oberflächen der Schenkel 14, dass sich diese nicht mehr um den Drehpin 18 herum drehen können. Sie legen damit den Lagerbolzen 12 in der aktuellen räumlichen Ausrichtung in den jeweiligen Langlöchern 22 fest. Damit die Schenkel 14 den von den Spannelementen 24, 26 erzeugten Spannkräften nicht auf Dauer nachgeben, ist in den Zwischenraum zwischen den Schenkeln 14 noch eine Distanzhülse 28 auf den Lagerbolzen 12 aufgeschoben. Die Verspannung der Schenkel 14 durch die Spannelemente 24, 26 erfolgt somit gegen die Stirnseiten der Distanzhülse 28.

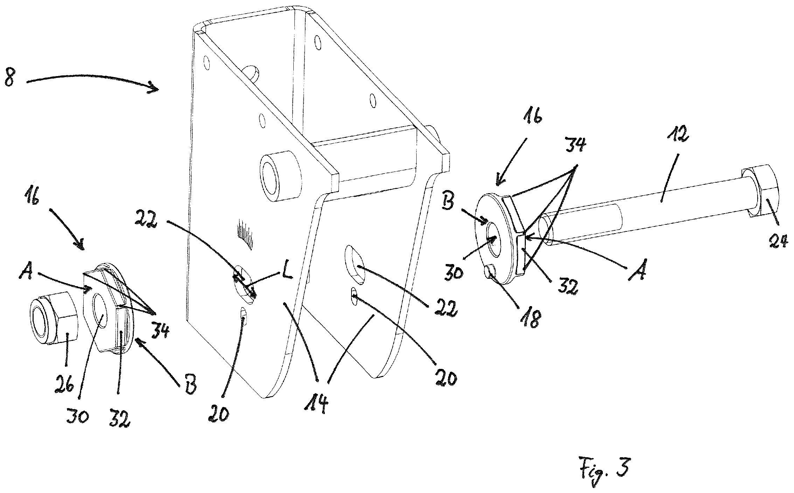

In Fig. 3 ist eine dreidimensionale Ansicht auf ein Ausführungsbeispiel einer Vorrichtung zur Justierung der räumlichen Lage eines Lagerbolzens 12 vor ihrem Zusammenbau gezeigt. Der Schenkel 14 ist in Fig. 3 nur ausschnittweise im Bereich der Verbindung mit dem Exzenterelement 16 gezeigt. Das Exzenterelement 16 verfügt über eine Durchführungsöffnung 30, durch die der Lagerbolzen 12 bereits hindurchgesteckt worden ist. Auf der dem Lagerbock 8 zugewandten Seite des Exzenterelements 16 ist der Drehpin 18 erkennbar, der dazu bestimmt ist, in das Drehlager 20 eingesteckt zu werden, das in dem Schenkel 14 an einer passenden Stelle ausgebildet ist. Nachdem der Drehpin 18 in das Drehlager 20 eingesteckt worden ist, indem das Exzenterelement 16 mit der dem Lagerbock 8 zugewandten Seite B auf den Schenkel 14 aufgelegt worden ist, kann sich das Exzenterelement 16 nur noch in einer Drehbewegung um den Drehpin 18 herum bewegen. Bei einer solchen Bewegung würde der Lagerbolzen 12 über die Durchführungsöffnung 30, mit der das Exzenterelement 16 den Lagerbolzen 12 umfasst, mitgenommen. Dabei würde sich der Lagerbolzen 12 entsprechend der jeweiligen Drehrichtung im Langloch 22 entlang der Längserstreckungsrichtung L bewegen, solange der Lagerbolzen 12 noch nicht an den Endanschlägen eines Langlochs 22 anliegt.

Das Langloch 22 hat in dem in Fig. 3 gezeigten Ausführungsbeispiel in Längserstreckungsrichtung L einen bogenförmigen Verlauf, da sich bei einer Verschwenkung des Exzenterelements 16 um den Drehpin 18 herum ebenfalls eine bogenförmig verlaufende Bewegung des Lagerbolzens 12 ergeben würde. Indem der bogenförmige Verlauf des Langlochs 22 dem Radius um das Drehlager 20 und den Drehpin 18 herum folgt, kann die Breite des Langlochs 22 in der gesamten Längserstreckungsrichtung L dem Durchmesser des Lagerbolzens 12 entsprechen, woraus sich minimale Toleranzen zwischen den Rändern des Langlochs 22 und dem Durchmesser des Lagerbolzens 22 ergeben. Die Enden des Langloches 22 bilden für den Lagerbolzen 12 einen Anschlag, durch den die Beweglichkeit des Exzenterelements 16 auch beschränkt ist, wenn der Drehpin 18 in das Drehlager 20 eingesteckt ist.

Aus der Ansicht in Fig. 3 ist gut erkennbar, dass das Exzenterelement 16 an seiner Umfangskontur 32 insgesamt sechs Ecken 34 aufweist. Das Exzenterelement 16 ist also als eine Platte mit einer sechseckigen Grundform ausgebildet. An den Kantenflächen der Umfangskontur 32 kann ein Werkzeug 36 angesetzt werden, mit dem das Exzenterelement 16 um den Drehpin 18 herum gedreht werden kann, um dabei den Lagerbolzen 12 entlang der Längserstreckungsrichtung L des Langloches 22 zu bewegen. Das Werkzeug 36 wird dabei in eine Richtung bewegt, durch die der Lagerbolzen 12 im Langloch 22 in die gewünschte Richtung gebracht wird. Die Ecken 34, die an der Umfangskontur 32 des Exzenterelements 16 ausgebildet sind, verzahnen sich bei einer Drehbewegung mit dem Werkzeug 36 um die Rotationsachse des Drehpins 18 herum mit dem Werkzeug 36, so dass über diese Kontaktflächen vergleichsweise hohe Stellkräfte auf das Exzenterelement 16 übertragen werden können. Die möglichen Drehrichtungen des Werkzeugs 36 sind in Fig. 3 durch einen Doppelpfeil angedeutet.

Um die Montage des in Fig. 3 gezeigten Lagerbolzens 12 im Lagerbock 8 abzuschließen, wird der Lagerbolzen 12 aus Fig. 3 mit dem an dem Schraubkopf anliegenden Exzenterelement 16 in das Langloch 22 so weit hineingesteckt, bis der Drehpin 18 in das Drehlager 20 eintaucht. Auf der gegenüberliegenden Seite des Lagerbocks 8 kann ebenfalls ein Exzenterelement 16 auf die Außenseite des zugehörigen Schenkels 14 des Lagerbocks 8 aufgeschoben werden, und zwar ebenfalls auf eine Weise, bis der dortige Drehpin 18 ebenfalls in das zugehörige Drehlager 20 eingreift. Sodann kann auf der gegenüberliegenden Seite des Lagerbocks 8 eine Schraubmutter 26 auf das freie Ende des Lagerbolzens 12 aufgedreht werden. Solange die Spannelemente 24, 26 noch nicht fest angezogen sind, kann sodann mit dem Werkzeug 36 das Exzenterelement 16 so lange hin und her gedreht werden, bis der Lagerbolzen 12 im Langloch 22 in einer gewünschten Ausrichtung zu liegen kommt. Sodann können die Spannelemente 24, 26 stramm angezogen werden, um sowohl den Lagerbolzen 12 als auch die Exzenterelemente 16 in der jeweils angenommenen räumlichen Lage im Lagerbock 8 festzulegen.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugsziffernliste

- 2: Fahrwerksaufhängung
- 4: Nutzfahrzeug
- 6: Rahmen
- 8: Lagerbock
- 10: Fahrwerksteil
- 12: Lagerbolzen
- 14: Schenkel
- 16: Exzenterelement
- 18: Drehpin
- 20: Drehlager
- 22: Langloch
- 24: Schraubkopf
- 26: Schraubmutter
- 28: Distanzhülse
- 30: Durchführungsöffnung
- 32: Umfangskontur
- 34: Ecke
- 36: Werkzeug
- L: = Längserstreckungsrichtung
- Seite A: - die dem Lagerbock 8 abgewandte Seite des Exzenterelements 16
- Seite B: - die dem Lagerbock 8 zugewandte Seite des Exzenterelements 16

## Patentansprüche

1. Fahrwerksaufhängung (2) eines Nutzfahrzeugs (4), die Fahrwerksaufhängung aufweisend einen an einem Rahmen (6) des Nutzfahrzeugs (4) anordenbaren Lagerbock (8), ein schwenkbeweglich von einem Lagerbolzen (12) im Lagerbock (8) gehaltenen Fahrwerksteil (10), wobei der Lagerbolzen (12) in beabstandet zueinander angeordneten Schenkeln (14) des Lagerbocks (8) in Langlöchern (22) gehalten ist, eine Vorrichtung zur Justierung der räumlichen Lage des Lagerbolzens (12) im Langloch (22) mit zumindest einem Exzenterelement (16), das eine Durchführungsöffnung (30) aufweist, durch die ein Ende des Lagerbolzens (12) hindurchgeführt ist und deren Form und Maße einen spielfreien, aber drehbeweglichen Sitz des Lagerbolzens (12) im Exzenterelement (16) schaffen, zwischen dem Exzenterelement (16) und dem benachbarten Schenkel (14) des Lagerbocks (8) ist eine Drehverbindung ausgebildet, über die das Exzenterelement (16) um einen zur Durchführungsöffnung (30) seitlich versetzt angeordneten Drehpin (18) in einem Drehlager (20) drehbeweglich gelagert ist, das Exzenterelement (16) weist eine unrunde Umfangskontur (32) auf, der Lagerbolzen (12) ist in der Gebrauchsstellung in seiner räumlichen Lage in den Langlöchern (22) von verstellbaren Spannelementen (24,26) gehalten, die sich auf den Schenkeln (14) des Lagerbocks (8) abstützen, im Zwischenraum zwischen den Schenkeln (14) des Lagerbocks (8) ist eine Distanzhülse (28) auf den Lagerbolzen (12) aufgesetzt, das Exzenterelement (16) ist als Platte ausgebildet, die unrunde Umfangskontur (32) des zumindest einen Exzenterelements (16) ist mehreckig ausgeführt, und das Exzenterelement (16) ist bei noch nicht angespannten Spannelementen (24,26) beweglich, **dadurch gekennzeichnet, dass**, das zumindest eine Exzenterelement (16) sich in der Gebrauchsstellung zwischen dem benachbarten Spannelement (24,26) und dem benachbarten Schenkel (14) des Lagerbocks (8) befindet, die Platte auf ihrer dem Lagerbock (8) abgewandten Seite (A) für das dort angeordnete Spannelement (24,26) eine plane Auflagefläche aufweist, an den Ecken (34) der Umfangskontur (32) ein Werkzeug (36) formschlüssig anlegbar ist, und das Exzenterelement (16) mit dem an das Exzenterelement (16) angelegten Werkzeug (36) um den Drehpin (18) beweglich ist.

2. Fahrwerksaufhängung (2) nach Anspruch 1, **dadurch gekennzeichnet, dass** das Exzenterelement (16) auf seiner dem benachbarten Schenkel (14) des Lagerbocks (8) zugewandten Seite (B) keine Vorsprünge aufweist, die in das in diesem Schenkel (14) ausgebildete Langloch (22) hineinragen.

3. Fahrwerksaufhängung (2) nach Anspruch 1 oder 2, **dadurch gekennzeichnet, dass** das Exzenterelement (16) als vier- oder sechseckige Platte ausgestaltet ist.

4. Fahrwerksaufhängung (2) nach einem der vorhergehenden Ansprüche, **dadurch gekennzeichnet, dass** an beiden Schenkeln (14) des Lagerbocks (8) ein Exzenterelement (16) verwendet ist.

5. Fahrwerksaufhängung (2) nach einem der vorhergehenden Ansprüche, **dadurch gekennzeichnet, dass** das oder die Langlöcher (22) in den Schenkeln (14) des Lagerbocks (8) entlang ihrer Längserstreckungsrichtung (L) einen gebogenen Verlauf aufweisen.

6. Fahrwerksaufhängung (2) nach einem der vorhergehenden Ansprüche, **dadurch gekennzeichnet, dass** das Exzenterelement (16) auf seiner dem Lagerbock (8) abgewandten Seite (A) eine Positionsmarkierung aufweist.

7. Fahrwerksaufhängung (2) nach einem der vorhergehenden Ansprüche, **dadurch gekennzeichnet, dass** das Drehlager (20) zur Lagerung des Drehpins (18) eine unrunde Innenform aufweist.

## Claims

1. Chassis suspension (2) of a utility vehicle (4), the chassis suspension having a bearing block (8) which can be arranged on a frame (6) of the utility vehicle (4), a chassis part (10) which is held pivotably by a bearing pin (12) in the bearing block (8), wherein the bearing pin (12) is held in elongated holes (22) in legs (14) of the bearing block (8) arranged at a distance from one another, a device for adjusting the position in space of the bearing pin (12) in the elongated hole (22), having at least one eccentric element (16) which has a passage opening (30) through which one end of the bearing pin (12) is guided, and the shape and dimensions of which create a rotationally-movable seat of the bearing pin (12) in the eccentric element (16) without play, between the eccentric element (16) and the adjacent leg (14) of the bearing block (8), a rotational connection is formed, by means of which the eccentric element (16) is rotatably mounted about a pivot pin (18), arranged laterally offset to the passage opening (30), in a pivot bearing (20), the eccentric element (16) has a non-round peripheral contour (32), the bearing pin (12) is held in its position in space in the position of use in the elongated hole (22) by adjustable clamping elements (24, 26) supported on the legs (14) of the bearing block (8), in the intermediate space between the legs (14) of the bearing block (8), a spacer sleeve (28) is fitted onto the bearing pin (12), the eccentric element (16) is designed as a plate, the non-round peripheral contour (32) of the at least one eccentric element (16) is polygonal, and the eccentric element (16) is movable when the clamping elements (24, 26) are not yet tightened, **characterized in that,** the at least one eccentric element (16), in the position of use, is located between the adjacent clamping element (24, 26) and the adjacent leg (14) of the bearing block (8), the plate has a planar contact surface on its side (A), facing away from the bearing block (8), for the clamping element (24, 26) arranged there, a tool (36) can be fitted onto the corners (34) of the peripheral contour (32) in a form-fitting manner, and the eccentric element (16) is movable about the pivot pin (18) by means of the tool (36) fitted onto the eccentric element (16).

2. Chassis suspension (2) according to claim 1, **characterized in that** the eccentric element (16) has no projections on its side (B) facing the adjacent leg (14) of the bearing block (8) which protrude into the elongated hole (22) formed in this leg (14).

3. Chassis suspension (2) according to claim 1 or 2, **characterized in that** the eccentric element (16) is designed as a rectangular or hexagonal plate.

4. Chassis suspension (2) according to one of the preceding claims, **characterized in that** one eccentric element (16) is used on both legs (14) of the bearing block (8).

5. Chassis suspension (2) according to one of the preceding claims, **characterized in that** the elongated holes (22) in the legs (14) of the bearing block (8) have a curved profile along their longitudinal direction of extension (L).

6. Chassis suspension (2) according to one of the preceding claims, **characterized in that** the eccentric element (16) has a position mark on its side (A) facing away from the bearing block (8).

7. Chassis suspension (2) according to one of the preceding claims, **characterized in that** the pivot bearing (20) has a non-round inner shape for mounting the pivot pin (18).

## Revendications

1. Suspension de châssis (2) d'un véhicule utilitaire (4), la suspension de châssis présentant un support de palier (8) pouvant être agencé sur un cadre (6) du véhicule utilitaire (4), une pièce de châssis (10) maintenue de manière mobile en pivotement par un axe de palier (12) dans le support de palier (8), dans laquelle l'axe de palier (12) est maintenu dans des trous oblongs (22) dans des branches (14) du support de palier (8) agencées à distance l'une de l'autre, un dispositif d'ajustement de la position spatiale de l'axe de palier (12) dans le trou oblong (22) comportant au moins un élément excentrique (16), qui présente une ouverture de passage (30), à travers laquelle une extrémité de l'axe de palier (12) est introduite et dont la forme et les dimensions créent un logement sans jeu, mais mobile en rotation, de l'axe de palier (12) dans l'élément excentrique (16), entre l'élément excentrique (16) et la branche (14) voisine du support de palier (8), une liaison de rotation est formée, par l'intermédiaire de laquelle l'élément excentrique (16) est monté mobile en rotation autour d'une broche de rotation (18) agencée décalée latéralement de l'ouverture de passage (30) dans un palier de rotation (20), l'élément excentrique (16) présente un contour périphérique non rond (32), l'axe de palier (12) est maintenu, dans la position d'utilisation, dans sa position spatiale dans les trous oblongs (22) par des éléments de serrage réglables (24,26), qui viennent en appui sur les branches (14) du support de palier (8), dans l'espace intermédiaire entre les branches (14) du support de palier (8), une douille d'espacement (28) est posée sur l'axe de palier (12), l'élément excentrique (16) est formé comme un plateau, le contour périphérique non rond (32) de l'au moins un élément excentrique (16) est réalisé en forme de polygone et l'élément excentrique (16) est mobile lorsque les éléments de serrage (24,26) ne sont pas encore serrés, **caractérisée en ce que,** l'au moins un élément excentrique (16) se trouve dans la position d'utilisation entre l'élément de serrage (24,26) voisin et la branche (14) voisine du support de palier (8), le plateau, sur son côté (A) opposé au support de palier (8) présente une surface d'appui plane pour l'élément de tension (24,26) qui y est agencé, au niveau des coins (34) du contour périphérique (32), un outil (36) peut être monté par complémentarité de formes et l'élément excentrique (16) est mobile autour de la broche de rotation (18) avec l'outil (36) monté sur l'élément excentrique (16).

2. Suspension de châssis (2) selon la revendication 1,
**caractérisée en ce que** l'élément excentrique (16) ne présente, sur son côté (B) tourné vers la branche (14) voisine du support de palier (8), aucune saillie, qui fait saillie dans le trou oblong (22) formé dans cette branche (14).

3. Suspension de châssis (2) selon la revendication 1 ou 2,
**caractérisée en ce que** l'élément excentrique (16) est réalisé sous forme de plateau à quatre ou six coins.

4. Suspension de châssis (2) selon l'une quelconque des revendications précédentes, **caractérisée en ce que** sur les deux branches (14) du support de palier (8), un élément excentrique (16) est utilisé.

5. Suspension de châssis (2) selon l'une quelconque des revendications précédentes, **caractérisée en ce que** le ou les trous oblongs (22) présente(nt) dans les branches (14) du support de palier (8), le long de leur direction d'extension longitudinale (L), un tracé courbé.

6. Suspension de châssis (2) selon l'une quelconque des revendications précédentes, **caractérisée en ce que** l'élément excentrique (16) présente, sur son côté (A) opposé au support de palier (8), un repère de positionnement.

7. Suspension de châssis (2) selon l'une quelconque des revendications précédentes, **caractérisée en ce que** le palier de rotation (20) présente une forme interne non ronde pour le support de la broche de rotation (18).
